(19) Europäisches Patentamt
European Patent Office
Office européen des brevets

(11) **EP 3 209 851 B1**

(12) **EUROPEAN PATENT SPECIFICATION**

(45) Date of publication and mention
of the grant of the patent:
**29.05.2024 Bulletin 2024/22**

(21) Application number: **15853490.9**

(22) Date of filing: **21.10.2015**

(51) International Patent Classification (IPC):
*E21B 28/00* (2006.01)      *E21B 43/00* (2006.01)
*G01V 1/00* (2024.01)      *G01V 1/02* (2006.01)
*G01V 1/137* (2006.01)

(52) Cooperative Patent Classification (CPC):
**E21B 28/00; E21B 43/003; G01V 1/137; G01V 1/52**

(86) International application number:
**PCT/US2015/056603**

(87) International publication number:
**WO 2016/064966 (28.04.2016 Gazette 2016/17)**

(54) **METHOD AND APPARATUS FOR SEISMIC STIMULATION OF PRODUCTION HORIZONS OF HYDROCARBON BEARING FORMATIONS**

VERFAHREN UND VORRICHTUNG ZUR SEISMISCHEN STIMULATION VON PRODUKTIONSHORIZONTEN VON KOHLENWASSERSTOFFHALTIGEN FORMATIONEN

PROCÉDÉ ET APPAREIL POUR LA STIMULATION SISMIQUE D'HORIZONS DE PRODUCTION DE FORMATIONS PÉTROLIFÈRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2014 US 201414756479**

(43) Date of publication of application:
**30.08.2017 Bulletin 2017/35**

(73) Proprietor: **Zencor Tools, LLP**
**Frisco, TX 75033 (US)**

(72) Inventors:
• **KOSTROV, Sergey A.**
**Frisco, TX 75033 (US)**
• **WOODEN, William O.**
**McKinney, TX 75070 (US)**

(74) Representative: **Gaunt, Thomas Derrick**
**Lewis Silkin LLP**
**Arbor**
**255 Blackfriars Road**
**London SE1 9AX (GB)**

(56) References cited:
**US-A1- 2012 175 107      US-A1- 2012 175 107**
**US-B1- 7 980 301      US-B2- 7 644 759**
**US-B2- 8 684 076**

• **MELVIN: 'Modelling a shock wave source for seismic well survey'' (Melvin, A' SHOCK WAVES vol. 8, 03 March 1998, pages 257 - 265, XP055274757**
• **KOSTROV: 'In situ seismic stimulation shows promise for revitalizing mature fields' OIL & GAS JOUMAL 18 April 2005, XP055274760**

**Description**

BACKGROUND OF THE INVENTION

The present invention relates to a shock wave generating method and device and, more particularly, to a method and device for repeatedly generating shock waves in a well borehole to enhance oil recovery and increase oil production and to carry out continuous seismic surveys of a hydrocarbon bearing formation.

BRIEF DESCRIPTION OF PRIOR ART

The U.S. patents No. 6,015,010, No. 6,899,175 and No.7,980,301 disclose methods and apparatuses for increasing the efficiency of the shock wave stimulation of the hydrocarbon bearing beds. However, the implementation of methods in accordance with U.S. patents No. 6,015,010, No. 6,899,175, No. 8,459,351 and No.7,980,301 have their drawbacks, i.e. the methods and apparatuses are not the optimal ones from the point of view of the efficiency of the devices implemented in accordance with U.S. patents No. 6,015,010, No. 6,899,175, No. 8,459,351 and No.7,980,301. In particularly the efficacy of the device's implementation could be substantially enhanced from the point of view matching the generated vibration frequency to so called dominant frequency of the hydrocarbon bearing production horizon. US Patent Application No. US2012/0175107 discloses a method and apparatus for producing shock waves in a well wherein a device connected to the bottom of the tubing string in the borehole of the well filled by liquid and containing the upper and lower plungers movably arranged within corresponding cylinders for compressing a liquid the compression chamber and discharging the liquid into the borehole on upstroke thereby generating a shock wave.
The present invention was developed to overcome drawbacks of prior methods and devices by providing the improved method and apparatus for producing shock waves in a borehole of the well filled or partially filled by the liquid.

SUMMARY OF INVENTION

Accordingly, a primary object of a first embodiment of the present invention is to provide the method for producing a shock wave in wells filled or partially filled by a liquid which includes a pumping unit arranged at the wellhead, a tubing string extending downwardly into the well borehole, a damper cylinder connected to the bottom of the tubing string at the upper end and to a damper chamber at the lower end. The damper chamber is connected to an upper cylinder. In addition, the damper cylinder has a different internal diameter than internal diameter of the upper cylinder. The damper plunger is movably arranged within damper cylinder and connected to the pumping unit by means of at least one sucker rod and a polish rod at the upper end and to the upper plunger at the lower end, which in turn is movably arranged within the upper cylinder, for creating a constant counterforce inside the damper chamber on upstroke of the pumping unit as a result of a constant flow of the fluid from the damper chamber into the borehole of the well or from the borehole of the well into the damper chamber through at least one hole on the side surface of the damper chamber or, as an alternative, through the channel inside a damper plunger hydraulically connecting damper chamber with tubing string. In addition, the upper cylinder is connected to a lower cylinder via compression chamber and the upper cylinder has a smaller internal diameter than the lower cylinder. A lower plunger movably arranged within the lower cylinder and the upper and lower plungers are connected to each other by means of at least one sucker rod for compressing a liquid contained within the compression chamber and discharging the liquid into borehole of a well when the lower plunger exits out of the lower cylinder on the upstroke of a pumping unit thereby generating a shock wave. In addition, providing a length of the upstroke $\mathbf{L_{str}}$ of the pumping unit determined by the following expression:

$$L_{str} \geq H_1 + \frac{(D_1^2 - D_2^2)A_{sw}L_2}{Ed_r^2},$$

where $\mathbf{H_1}$ is the length of the lower cylinder, $\mathbf{L_2}$ is the distance between the top of the lower plunger and the bottom of the upper plunger, $\mathbf{D_1}$ is the diameter of the lower plunger, $\mathbf{D_2}$ is the diameter of the upper plunger, $\mathbf{A_{sw}}$ is the required amplitude of the generated shock wave, $\mathbf{E}$ is a modulus of the elasticity of the sucker rod's material, $\mathbf{d_r}$ is the diameter of the sucker rods.
It is another object of the invention to provide the method for producing a shock wave in wells filled or partially filled by liquid in which the pumping unit operates not less than 12 hours per day.
It is a further object of the present invention to provide an apparatus for producing a shock wave in wells filled or partially filled by the liquid comprising of the device connected to the bottom of the tubing string in the borehole of the well filled by the liquid and consisting of the damper cylinder connected to the bottom of the tubing string at the upper end and to the damper chamber at the lower end and the damper chamber is connected to the upper cylinder, the damper cylinder has a different internal diameter than the internal diameter of the upper cylinder and the damper chamber has a hydraulic connection with the borehole of the well via at least one hole on its side surface, a damper plunger movably arranged within the damper cylinder and connected to the pumping unit by means of at least one sucker rod and polish rod at the upper end and connected to the upper plunger by at least one sucker rod at the lower end for creating the constant counterforce inside the damper chamber on the upstroke of the pumping unit as a result of the constant flow of the fluid from the damper chamber into the borehole of the well or from the borehole of the well into the damper chamber through at least one hole on the side surface of the damper chamber or, as an alternative, through the channel inside a damper plunger hydraulically connecting damper chamber with tubing string, the upper cylinder connected to a lower cylinder via compression chamber and having the smaller internal diameter than the internal diameter of the lower cylinder, the upper plunger connected to the lower plunger by means of at least one sucker rod and the upper and lower plungers movably arranged within the upper and lower cylinders, correspondingly, for compressing the liquid contained within the compression chamber and discharging the liquid into the borehole when the lower plunger exits out of the lower cylinder on upstroke of the pumping unit thereby generating the shock wave. In addition, the lower plunger has at least one truncated conical taper at the lower end and said truncated conical taper has an angle $\Psi$ relatively to a vertical symmetry axis of the lower plunger determined by the following formulae:

$$\psi = \frac{1}{3}\arccos ine\left[\frac{2S(1-\varphi)n_S L_{str}\left(D_1^2 - d_r^2\right)}{C_s \Delta t D_1^3}\right],$$

where $\Psi$ is the angle of the truncated conical taper on the lower end of the lower plunger, $\varphi$ is a total slippage of the fluid between the lower and upper cylinders and the lower and upper plungers, correspondingly, **ns** is a Strouhal number, $\mathbf{L_{str}}$ is the length of the upstroke of the pumping unit, $\mathbf{D_1}$ is the diameter of the lower plunger, $\mathbf{d_r}$ is the diameter of the sucker rods, $\mathbf{C_s}$ is a velocity of a shear wave in the hydrocarbon bearing formation sublayer, $\Delta\mathbf{t}$ is the discharging time of the compressed liquid from the compression chamber, $\mathbf{S}$ is a thickness of the hydrocarbon bearing formation sublayer having the particular dominant frequency.

It is another object of the invention to provide the apparatus for producing the shock wave in wells filled or partially filled by the liquid in which the lower plunger lower end has a truncated conical shape thereby creating a truncated conical taper in which the length $\mathbf{l}$ of the truncated conical taper on the lower end of the lower plunger is determined by the following expression:

$$0.1D_1 \le l \le \frac{D_1}{2\tan\psi},$$

where $\mathbf{l}$ is the length of the truncated conical taper on the lower end of the lower plunger, $\mathbf{D_1}$ is the diameter of the lower plunger, $\Psi$ is the angle of the truncated conical taper on the lower end of the lower plunger.

Also disclosed is apparatus for producing the shock wave in wells filled or partially filled by the liquid in which lower plunger has a truncated spherical taper at the lower end and said truncated spherical taper has a spherical radius $\mathbf{R}$ and the diameter $\mathbf{d_s}$ at the bottom of said truncated spherical taper determined by the following expressions:

$$d_s = D_1 - l\tan\psi$$

$$R \ge l\cos\psi$$

where $\mathbf{l}$ is length of said truncated spherical taper on the lower end of the lower plunger, $\mathbf{D_1}$ is the diameter of the lower plunger, $\Psi$ is an angle of said truncated spherical taper on the lower end of said lower plunger and equaled to the angle $\Psi$ of said truncated conical taper.

Also disclosed is apparatus for producing the shock wave in wells filled or partially filled by the liquid in which the lower plunger lower end has a truncated ellipsoidal shape thereby creating a truncated ellipsoidal taper and the diameter $\mathbf{d_e}$ at the bottom of said truncated ellipsoidal taper is determined by the following expression:

$$d_e = D_1 - l\tan\psi,$$

where **l** is length of said truncated ellipsoidal taper on the lower end of the lower plunger, $D_1$ is the diameter of the lower plunger, $\Psi$ is an angle of said truncated ellipsoidal taper on the lower end of said lower plunger and equaled to the angle $\Psi$ of said truncated conical taper.

Also disclosed is apparatus for producing the shock wave in wells filled or partially filled by the liquid in which the lower plunger lower end has a truncated hyperboloid shape thereby creating a truncated hyperboloid taper and the diameter $d_h$ at the bottom of said truncated hyperboloid taper is determined by the following expression:

$$d_h = D_1 - l \tan \psi,$$

where **l** is length of said truncated hyperboloid taper on the lower end of the lower plunger, $D_1$ is the diameter of the lower plunger, $\Psi$ is an angle of said truncated hyperboloid taper on the lower end of said lower plunger and equaled to the angle $\Psi$ of said truncated conical taper.

It is another object of the invention to provide the apparatus for producing the shock wave in wells filled or partially filled by the liquid in which the distance $L_2$ between the top of the lower plunger and the bottom of the upper plunger is determined by the following expression:

$$\frac{H_1 + L_1 - (l_1 + l_2 + L_{str})}{1 - \frac{(D_1^2 - D_2^2)A_{sw}}{E d_r^2}} \leq L_2 \leq (H_1 + H_2 + L_1) - (l_1 + l_2 + L_{str}),$$

where $H_1$ is the length of the lower cylinder, $H_2$ is the length of the upper cylinder, $l_1$ is the length of the lower plunger, $L_1$ is the length of the compression chamber, $l_2$ is the length of the upper plunger, $L_{str}$ is the length of the upstroke of the pumping unit, $D_1$ is the diameter of the lower plunger, $D_2$ is the diameter of the upper plunger, $A_{sw}$ is the required amplitude of the generated shock wave, $E$ is the modulus of the elasticity of the sucker rod's material, $d_r$ is the diameter of the sucker rods.

It is another object of the invention to provide the apparatus for producing the shock wave in wells filled or partially filled by the liquid in which the distance $L_4$ between the bottom of the damper plunger and the top of the upper plunger is determined by the following expression:

$$H_1 + H_2 + H_3 + L_1 + L_3 - (l_1 + l_2 + L_2 + l_3 + L_{str}) \leq L_4 \leq (H_1 + H_2 + H_3 + L_1 + L_3 + l_3) - (l_1 + l_2 + L_2 + L_{str})$$

where $H_1$ is the length of the lower cylinder, $H_2$ is the length of the upper cylinder, $l_1$ is the length of the lower plunger, $L_1$ is the length of the compression chamber, $l_2$ is the length of the upper plunger, $l_3$ is the length of the damper plunger, $H_3$ is the length of the damper cylinder, $L_3$ is the length of the damper chamber, $L_2$ is the distance between the top of the lower plunger and the bottom of the upper plunger, $L_{str}$ is the length of the stroke of the pumping unit.

It is another object of the invention to provide the apparatus for producing the shock wave in wells filled or partially filled by the liquid in which in order to compensate for the stretching and buckling of the sucker rods inside the tubing, the total length of the sucker rods connecting the top of the damper plunger and the bottom of said polish rod is reduced compared with the nominal length $L_5$ of the sucker rods, the distance between the bottom of the polish rod and a top of the damper plunger at a position of the pumping unit corresponding to the bottom or start of an upstroke by distance $\lambda$ determined by the following formulae:

$$\lambda \geq \frac{H}{E} \left[ \frac{(D_1^2 - D_2^2)A_{sw}}{d_r^2} + \frac{gH(\rho_s - \rho_f)}{2} \right] + H\eta,$$

where $D_1$ is the diameter of the lower plunger, $D_2$ is the diameter of the upper plunger, $A_{sw}$ is the required amplitude of the generated shock wave, $H$ is the positional depth of the bottom of the lower plunger corresponding to the bottom/start of the pumping unit upstroke, $H = l_1 + l_2 + l_3 + L_2 + L_4 + L_5$ wherein $l_1$ is a length of said lower plunger, $l_2$ is a length of said upper plunger, $l_3$ is a length of said damper plunger, $L_2$ is a distance between a top of said lower plunger and a bottom of said upper plunger, $L_4$ is a distance between the bottom of the damper plunger and the top of the upper plunger, $L_5$ is a length of the sucker rods between the bottom of said polish rod and the top of said damper plunger, $E$ is the modulus of the elasticity of the sucker rod's material, $d_r$ is the diameter of the sucker rods, $\rho_s$ is a density of the pumping means material, $\rho_s$ is the density of the liquid, $\pi = 3.1415$, $\eta$ is a buckling coefficient of the sucker rods inside the tubing per unit of the tubing length.

## BRIEF DESCRIPTION OF THE DRAWINGS

Other objects and advantages of the invention will become apparent from the study of the following specification when viewed in light of the accompanying drawings, in which:

> **FIG. 1** is a cross-sectional side view of the device installed in the well borehole according to the invention.
> **FIG. 2** is a cross-sectional view of the compression chamber, the lower cylinder and the lower plunger with the truncated conical taper.
> **FIG. 3** is view of the lower plunger with a truncated spherical taper, not forming part of the claimed invention.
> **FIG. 4** is view of the lower plunger with a truncated ellipsoidal taper, not forming part of the claimed invention.
> **FIG. 5** is view of the lower plunger with a truncated hyperboloid taper, not forming part of the claimed invention.

## DETAILED DESCRIPTION

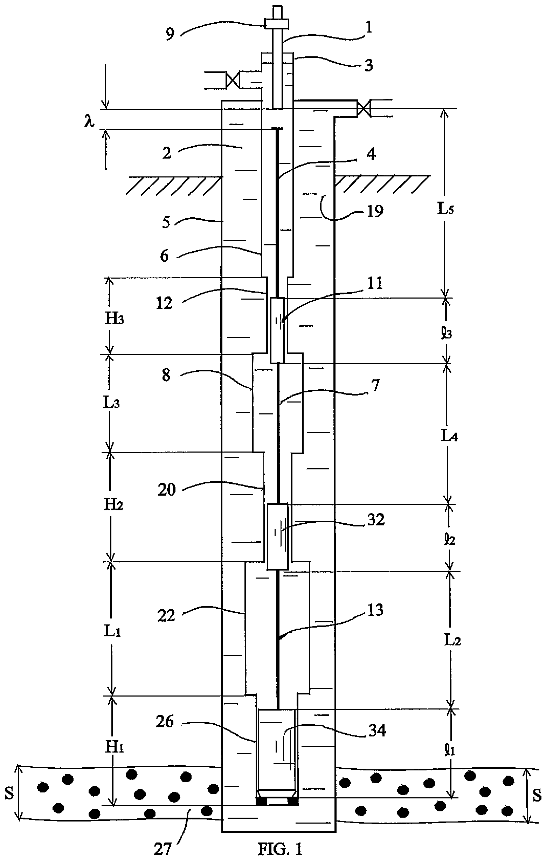

Referring to **FIG. 1** there is shown a device for producing a shock wave in borehole **19** of a well filled or partially filled by the liquid **2**. The device includes a pumping unit (not shown) arranged at the wellhead of the well, a tubing string **6** extending downwardly into the production casing **5** of the well, the damper cylinder **12** installed at the end of the tubing string **6**, the damper chamber **8** installed at the end of the damper cylinder **12** and connected to the upper cylinder **20** which in turn is connected to the compression chamber **22** connected to the lower cylinder **26**. The damper plunger **11** is moveably arranged within the damper cylinder **12** and connected at its upper end to the pumping unit by at least one first sucker rod **4** and a polish rod **1** movably arranged in the stuffing box **3**, and connected at its lower end by at least one second sucker rod **7** to the upper plunger **32** for creating a constant counterforce inside said damper chamber **8** on an upstroke of the pumping unit as a result of the constant flow of the fluid from the damper chamber **8** into the borehole **19** of the well or from the borehole of the well **19** into the damper chamber **8** through at least one hole (not shown) on the side surface of the damper chamber **8** and said upper plunger **32** is moveably arranged within upper cylinder **20**. The polish rod **1**, in turn, is connected to the horse head (not shown) of the pumping unit by the carrier **9**. The upper plunger **32** is connected at its lower end to the lower plunger **34** by at least one third sucker rod **13** and the lower plunger **34** is moveably arranged within the lower cylinder **26** for compressing a liquid contained within the compression chamber **22** and discharging the liquid into the borehole **19** of the well when the lower plunger **34** exits out of the lower cylinder **26** on the upstroke of the pumping unit thereby generating a shock wave. In addition, a length of the stroke **L$_{str}$** of the pumping unit determined by the following expression:

$$L_{str} \geq H_1 + \frac{(D_1^2 - D_2^2)A_{sw}L_2}{Ed_r^2},$$

where **H$_1$** is the length of the lower cylinder **26**, **L$_2$** is the distance between the top of lower plunger **34** and bottom of the upper plunger **32**, **D$_1$** is the diameter of the lower plunger **34**, **D$_2$** is the diameter of the upper plunger **32**, **A$_{sw}$** is the required amplitude of the generated shock wave, **E** is a modulus of elasticity of the sucker rod's material, **d$_r$** is the diameter of the sucker rods **4**, **7** and **13**. In particular, length of stroke **L$_{str}$** $\geq$ 3.66 m for the following parameters: **H$_1$** = 3.65m **L$_2$** = 32 m, **D$_1$** = 0.082 m, **D$_2$** =0.07 m, **A$_{sw}$** = 24.5 MPa, **E** = $2 \times 10^{11}$Pa, **d$_r$** = 0.0254 m.

As shown on **FIG.1,** a hydrocarbon bearing formation sublayer **27** has a thickness **S**. Every such particular sublayer **27** has its own, so called, dominant frequency **f$_d$**, i.e. the frequency on which the elastic waves propagate through this sublayer **27** with the lowest attenuation coefficient thereby reaching farther distance compared with the elastic waves on other frequencies. The dominant frequency **f$_d$** can be estimated by the simple expression (see for instance V.N. Nikolayevsky et. Al., "Residual Oil Reservoir Recovery with Seismic Vibrations", SPE 29155, Production & Facility, May 1995, pp. 89-94):

$$f_d = \frac{C_s}{4S},$$

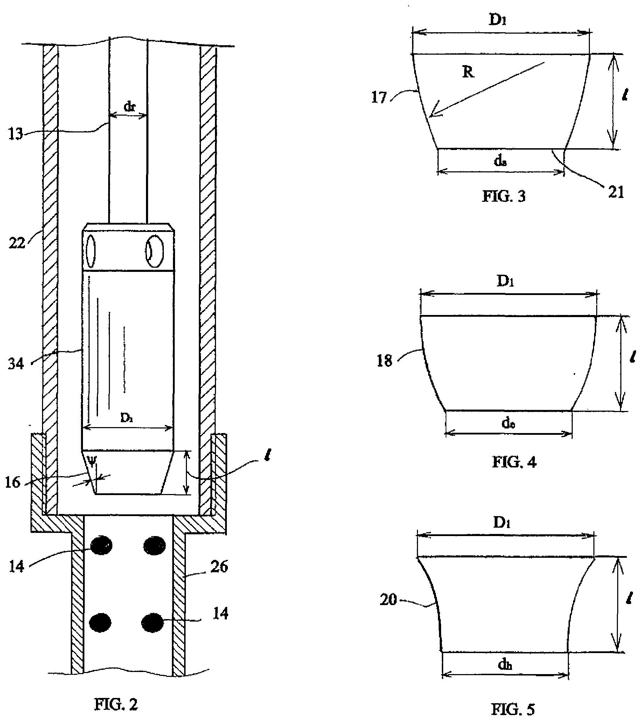

wherein **C$_s$** is a velocity of a shear wave in the hydrocarbon bearing formation sublayer **27** and **S** is a thickness of the hydrocarbon bearing formation sublayer **27** having the particular dominant frequency **f$_d$**. On another hand, when the lower plunger **34** exits out of the lower cylinder **26** on every upstroke of the pumping unit thereby generating the shock wave, the discharged flow of liquid, in turn, generates the vibrations due to creating a periodic vortices **14** in accordance with well-known phenomenon of an auto-oscillations discovered by V. Strouhal in 19th century. More details about phenomenon of auto-oscillations could be found for example in the articles: Sobey, Ian J. (1982). "Oscillatory flows at intermediate Strouhal number in asymmetry channels". Journal of Fluid Mechanics, N. 125: 359-373 and Sakamoto, H.; Haniu, H. (1990). "A study on vortex shedding from spheres in uniform flow". Journal of Fluids Engineering, N 112 (December 1992): 386-392. Therefore, the further object of the present invention is to provide an apparatus for producing shock waves which, in turn, generate the vibrations on the frequency equaled to the dominant frequency $f_d$ thereby providing the resonant mode. Such apparatus in wells filled or partially filled by liquid comprising of the device connected to the bottom of the tubing string **6** in the borehole **19** of the well filled by liquid and consisting of the damper cylinder **12** connected to the bottom of the tubing string **6** at the upper end and to the damper chamber **8** at the lower end and the damper chamber **8** is connected to the upper cylinder **20**, the damper cylinder **12** having a different internal diameter than the internal diameter of the upper cylinder **20** and the damper chamber **8** has a hydraulic connection with borehole **19** of the well via at least one hole on the side surface of said damper chamber **8** or, as an alternative, through the channel (not shown) inside the damper plunger **11** hydraulically connecting damper chamber **8** with tubing string **6**, the damper plunger **11** movably arranged within the damper cylinder **12** and connected to the pumping unit by means at least one first sucker rod **4** and a polish rod **1** at the upper end and connected to the upper plunger **32** by at least one second sucker rod **7** at the lower end for creating a constant counterforce inside the damper chamber **8** on the upstroke of the pumping unit as a result of a constant flow of the fluid from the damper chamber **8** into the borehole **19** of the well or from the borehole **19** of the well into the damper chamber **8** through at least one hole on the side surface of the damper chamber **8**, the upper cylinder **20** connected to a lower cylinder **26** via a compression chamber **22** and having a smaller internal diameter than the internal diameter of the lower cylinder **26**, the upper plunger **32** connected to the lower plunger **34** by at least one third sucker rod **13** and the upper **32** and lower **34** plungers movably arranged within the upper **20** and lower **26** cylinders, correspondingly, for compressing a liquid contained within the compression chamber **22** and discharging the liquid into the borehole **19** when the lower plunger **34** exits out of the lower cylinder **26** on the upstroke of the pumping unit thereby generating the shock wave. In addition, the lower plunger **34** has at least one truncated conical taper **16** at the lower end (see **FIG. 2**) and said truncated conical taper **16** has an angle ψ relatively to a vertical symmetry axis of the lower plunger **34** determined by the following formulae:

$$\psi = \frac{1}{3}\arccos ine\left[\frac{2S(1-\varphi)n_S L_{str}\left(D_1^2 - d_r^2\right)}{C_s \Delta t D_1^3}\right],$$

wherein ψ is the angle of the truncated conical taper **16** on the lower end of the lower plunger **34**, φ is the total slippage of the fluid between the lower **26** and upper **20** cylinders and the lower 34 and upper **32** plungers, correspondingly, $n_S$ is Strouhal number, $L_{str}$ is the length of the upstroke of the pumping unit, $D_1$ is the diameter of the lower plunger **34**, $d_r$ is the diameter of at least one sucker rod **13**, $C_s$ is a velocity of a shear wave in the hydrocarbon bearing formation sublayer **27**, $\Delta t$ is the discharging time of the compressed liquid from the compression chamber **22**, S is a thickness of the hydrocarbon bearing formation sublayer **27** having the particular dominant frequency $f_d$.

The angle ψ of the truncated conical taper **16** on the lower end of the lower plunger **34** provides the flowing regime of discharged liquid from the compression chamber **22** in such manner that the appearing vortices **14** will be occurring on the dominant frequency $f_d$ thereby providing the resonant phenomenon. In particularly, for the dominant frequency $f_d$ = 150 Hz the angle ψ of the truncated conical taper **16** has to be equaled 17[0] to provide the resonance under the following parameters: **S** = 2.5 m, φ = 0.1, $n_S$ =0.21, $L_{str}$ = 3.6 m, $D_1$ =0.082 m, $d_r$ = 0.0254m, $C_s$ =1500 m/sec, $\Delta t$ =0.04 sec.

At the same time the length **l** for the truncated conical taper **16** is described by the following expression:

$$0.1D_1 \leq l \leq \frac{D_1}{2\tan\psi}$$

will vary in the range 0.0082 m ≤ **1** ≤ 0.134 m for $D_1$ = 0.082 m and ψ = 17[0].

Referring to **FIG. 3,** the lower plunger (34) lower end comprises a truncated spherical taper. In this case the sphere radius **R** and the diameter $d_s$ of the low part of the truncated spherical taper **21** are determined by the following expressions:

$$d_s = D_1 - l\tan\psi$$

and

$$R \geq l \cos \psi,$$

wherein **l** is the length of the truncated spherical taper **17** on the lower end of the lower plunger **34**, $D_1$ is the diameter of the lower plunger **34**, $\psi$ is an angle of said truncated spherical taper on the lower end of said lower plunger and equaled to the angle $\psi$ of said truncated conical taper.

In particular, R $\geq$ 0.048 v for **l = 0.05 m** and $\psi$ = 17$^0$, and $d_s$ = 0.035 m.

Referring to **FIG. 4** and **FIG. 5,** the truncated taper at the end of the lower plunger **34** can have an ellipsoidal or hyperbolic shape, correspondingly. For the same parameters, **l = 0.05 m** and $\psi$ = 17$^0$, the corresponding diameters $d_e$ and $d_h$ of the truncated ellipsoidal taper **18** and the truncated hyperbolic taper **20** are equaled: $d_e$ = $d_h$ = 0.035 m for **l = 0.05 m** and $\psi$ = 17$^0$.

During the installation of the device in accordance with invention (see **FIG. 1**) the distance $L_2$ between the top of the lower plunger **34** and the bottom of the upper plunger **32** has to be set up in accordance with the following expression:

$$\frac{H_1 + L_1 - (l_1 + l_2 + L_{str})}{1 - \frac{(D_1^2 - D_2^2)A_{sw}}{E d_r^2}} \leq L_2 \leq (H_1 + H_2 + L_1) - (l_1 + l_2 + L_{str}),$$

wherein $H_1$ is the length of the lower cylinder **26**, $H_2$ is the length of the upper cylinder **20**, $l_1$ is the length of the lower plunger **34**, $L_1$ is the length of the compression chamber **22**, $l_2$ is the length of the upper plunger **32**, $L_{str}$ is the length of the upstroke of the pumping unit, $D_1$ is the diameter of the lower plunger **34**, $D_2$ is the diameter of the upper plunger **32**, $A_{sw}$ is the required amplitude of the generated shock wave, **E** is the modulus of the elasticity of the sucker rod's material, $d_r$ is the diameter of the sucker rods **13**. In particular, the distance $L_2$ between the top of the lower plunger **34** and the bottom of the upper plunger **32** varies in the range 28.5 m $\leq L_2 \leq$ 34.24 m for the following parameters: $H_1$ = 5.3 m, $H_2$ = 6.0 m, $l_1$ = 1.2 m, $L_1$ = 29 m, $l_2$ = 1.2 m, **Lstr**= 3.66 m, $D_1$ = 0.082 m, $D_2$ = 0.070 m, $A_{sw}$ = 24.5$\times$10$^6$ Pa, **E** = 2.12$\times$10$^{11}$ Pa, $d_r$ = 0.0254 m.

The similar set up of the distance $L_4$ between the bottom of the damper plunger **11** and the top of the upper plunger **32** should fulfill the following expression:

$$H_1 + H_2 + H_3 + L_1 + L_3 - (l_1 + l_2 + L_2 + l_3 + L_{str}) \leq L_4 \leq (H_1 + H_2 + H_3 + L_1 + L_3 + l_3) - (l_1 + l_2 + L_2 + L_{str})$$

wherein $H_1$ is the length of the lower cylinder **26**, $H_2$ is the length of the upper cylinder **20**, **lt** is the length of the lower plunger **34**, $L_1$ is the length of the compression chamber **22**, $l_2$ is the length of the upper plunger **32**, $l_3$ is the length of the damper plunger **11**, $H_3$ is the length of the damper cylinder **12**, $L_3$ is the length of the damper chamber **8**, $L_2$ is the distance between the top of the lower plunger **34** and bottom of the upper plunger **32**, $L_{str}$ is the length of the upstroke of the pumping unit.

In particular, the distance $L_4$ between the bottom of the damper plunger **11** and the top of the upper plunger **32** varies in the range 16.64 m $\leq L_4 \leq$ 19.04 m for the following parameters: $H_1$ = 5.3 m, $H_2$ = 6.0 m, $H_3$ = 6.0 m, $l_1$ = 1.2 m, $L_1$ = 29 m, $L_2$ = 32 m, $L_3$ = 9.6 m, $l_2$ = 1.2 m, $l_3$ = 1.2 m, **Lstr**= 3.66 m.

During the installation of the device in accordance with invention (see **FIG. 1**) the buckling of the sucker rods **4, 7, 13** as well as the stretching of sucker rods **4, 7, 13** on the upstroke of pumping unit, when the bottom of the lower plunger **34** resides at the bottom of the lower cylinder **26,** should be compensated. In this case the total length of the sucker rods connecting the top of the damper plunger **11** to the bottom of the polish rod **1** is reduced compared with the distance $L_5$ between the bottom of said polish rod 1 and top of said damper plunger 11 at the position of said pumping unit corresponding to the bottom or start of an upstroke by a distance $\lambda$ determined by the following formulae:

$$\lambda \geq \frac{H}{E}\left[\frac{(D_1^2 - D_2^2)A_{sw}}{d_r^2} + \frac{gH(\rho_s - \rho_f)}{2}\right] + H\eta,$$

where $D_1$ is the diameter of the lower plunger **34**, $D_2$ is the diameter of the upper plunger **32**, $A_{sw}$ is the required amplitude of the generated shock wave, **H** is the positional depth of the bottom of lower plunger **34** at the bottom of the pumping unit upstroke, **H = $l_1$ + $l_2$ + $l_3$ + $L_2$ + $L_4$ + $L_5$** (see **FIG. 1**) wherein $l_1$ is a length of said lower plunger, $l_2$ is a length of said

upper plunger, $l_3$ is a length of said damper plunger, $L_2$ is a distance between a top of said lower plunger **34** and a bottom of said upper plunger **32**, $L_4$ is a distance between the bottom of the damper plunger **11** and the top of the upper plunger **32**, $L_5$ is a length of the sucker rods between the bottom of said polish rod **1** and the top of said damper plunger **11**, **E** is a modulus of elasticity of the sucker rod's material, $d_r$ is the diameter of the sucker rods **4** , $\rho_s$ is the density of the sucker rod's material, $\rho_s$ is the density of liquid, $\pi$ =3.1415, $\eta$ is a buckling coefficient of the sucker rods **4** inside the tubing string **6** per unit of tubing length (varies between 0.001 to 0.003 depending on the size of tubing string **6** and sucker rods **4** inside this tubing string **6**). The length $L_5$ of sucker rods **4** corresponds to the position of polish rod **1** when the whole sucker rod string consisting of **4, 7** and **13** sucker rods and polish rod **1** are stuck out.

In particular, the distance $\lambda \geq 2.79$ m for the following parameters: $D_1$ = 0.082 m, $D_2$ = 0.07 m, $A_{sw}$ = 24.5×10^6 Pa, **E** = 2.12×10^11 Pa, **H** =1500 m, $d_r$ =0.0254 m, $\rho_s$ = 7800 kg/m^3, $\rho_f$ = 1000 kg/m^3, $\pi$ =3.1415, $\eta$ = 0.0013 (for 25.4 mm (1 inch) sucker rods and 73 mm (2 7/8 inch) tubing), **g** = 9.81 m/sec^2.

### Claims

1. A method for producing shock waves in a borehole (19) of a well filled or partially filled by a liquid, for stimulation of a production horizons of a hydrocarbon bearing formations, comprising the steps of:

   a) positioning a device connected to a bottom of a tubing string (6) extending downwardly into the borehole (19) of the well filled or partially filled by the liquid the device including:

   i) a damper cylinder (12) connected to a bottom of said tubing string (6) at an upper end and to a damper chamber (8) at a lower end;
   ii) an upper cylinder (20) connected to a damper chamber (8), and said damper cylinder (12) has a different internal diameter than an internal diameter of said upper cylinder (20) and said damper chamber (8) has a hydraulic connection with borehole (19) of the well via at least one hole on a side surface of said damper chamber(8);
   iii) a damper plunger (11) movably arranged within said damper cylinder (12) and connected to a pumping unit by means of at least one sucker rod (4) and a polish rod (1) at an upper end and connected to an upper plunger (32) by at least one sucker rod (7) at the lower end for creating a constant counterforce inside said damper chamber (8) on an upstroke of the pumping unit as a result of a constant flow of the fluid from said damper chamber (8) into the borehole (19) of the well or from the borehole (19) of the well into said damper chamber (8) through the at least one hole on a side surface of said damper chamber (8);
   iv) a lower cylinder (26) connected to said upper cylinder (20) via a compression chamber (22) and said upper cylinder (20) has a smaller internal diameter than the internal diameter of said lower cylinder (26);
   v) a lower plunger (34) connected to said upper plunger (32) by at least one sucker rod (13) and said upper and lower plungers (32, 34) movably arranged within said upper and lower cylinders (12, 26), correspondingly, for compressing the liquid contained within said compression chamber (22) and discharging the liquid into the borehole (19) when said lower plunger (34) exits out of said lower cylinder (26) on the upstroke of the pumping unit thereby generating a shock wave;
   **characterized by**

   b) providing a length of an upstroke $L_{str}$ of the pumping unit determined by the following expression:

   $$L_{str} \geq H_1 + \frac{(D_1^2 - D_2^2)A_{sw}L_2}{Ed_r^2},$$

   wherein $H_1$ is the length of said lower cylinder (26), $L_2$ is the distance between the top of said lower plunger (34) and bottom of said upper plunger (32), $D_1$ is the diameter of said lower plunger (34), $D_2$ is the diameter of said upper plunger(32), $A_{sw}$ is the required amplitude of the generated shock wave, **E** is a modulus of an elasticity of the sucker rod's material, $d_r$ is the diameter of said sucker rods (4, 7, 13), and
   wherein said lower plunger lower end has a truncated taper configuration, said truncated taper is a truncated conical taper, and wherein said truncated conical taper comprises an angle relative to a vertical symmetry axis of said lower plunger determined by the following formulae:

$$\psi = \frac{1}{3}\arccos\!ine\left[\frac{2S(1-\varphi)n_S L_{str}\left(D_1^2 - d_r^2\right)}{C_s \Delta t D_1^3}\right],$$

where $\psi$ is the angle of said truncated conical taper on the lower end of said lower plunger, $\varphi$ is a total slippage of the fluid between said lower and upper cylinders and said lower and upper plungers, correspondingly, $n_S$ is a Strouhal number, $L_{str}$ is the length of the upstroke of the pumping unit, $D_1$ is the diameter of said lower plunger, $d_r$ is the diameter of said sucker rods, $C_s$ is a velocity of a shear wave in the hydrocarbon bearing formation sublayer, $\Delta t$ is the discharging time of the compressed liquid from said compression chamber, $S$ is a thickness of the hydrocarbon bearing formation sublayer having the particular dominant frequency,

whereby said angle of said truncated conical taper provides the generation of the periodic vortices in a regime of an auto-oscillations and the frequency of said auto-oscillations equals to said dominant frequency of formation thereby providing the resonance phenomenon as an act of coincidence between frequency of said auto-oscillations vibrations generated by said apparatus and the dominant frequency of formation.

2. A method as defined in claim **1** wherein the pumping unit operates not less than 12 hours per day.

3. An apparatus for producing shock waves in a borehole (19) of a well filled or partially filled by a liquid for stimulation of the production horizons of hydrocarbon bearing formations in the regime of a resonance, the apparatus comprising:

    a) a tubing string (6) extending downwardly into the borehole (19) of the well filled or partially filled by the liquid;
    b) a damper cylinder (12) connected to the bottom of the tubing string (12) at the upper end and to a damper chamber (8) at the lower end, and said damper chamber (8) being connected to an upper cylinder (20), said damper cylinder (12) having a different internal diameter than an internal diameter of said upper cylinder (20);
    c) a damper plunger (11) movably arranged within said damper cylinder (12) and connected to a pumping unit by at least one sucker rod (4) and a polish rod (1) at the upper end and to an upper plunger(32), movably arranged within said upper cylinder (20), at the lower end for creating the constant counterforce inside said damper chamber (8) on the upstroke of the pumping unit as the result of the constant flow of the fluid from said damper chamber (8) into the borehole (19) of the well or from the borehole (19) of the well into said damper chamber (12) through at least one hole on the side surface of said damper chamber (12) thereby providing the hydraulic communication between said damper chamber (12) and the borehole (19);
    d) a lower cylinder (26) connected via a compression chamber (22) to said upper cylinder (20) having the smaller internal diameter than an internal diameter of said lower cylinder (26);
    e) a lower plunger (34) movably arranged within said lower cylinder (26), and said upper and lower plungers (20, 26) being connected to each other by at least one sucker rod (13) for compressing the liquid contained within said compression chamber (22) and discharging the liquid into the borehole (19) of the well when said lower plunger (34) exits out of said lower cylinder (26) on the upstroke of the pumping unit thereby generating the shock wave; and **characterized in that**
    f) said lower plunger (34) lower end comprises a truncated taper configuration, said truncated taper is a truncated conical taper, and wherein said truncated conical taper comprises an angle relative to a vertical symmetry axis of said lower plunger determined by the following formulae:

$$\psi = \frac{1}{3}\arccos\!ine\left[\frac{2S(1-\varphi)n_S L_{str}\left(D_1^2 - d_r^2\right)}{C_s \Delta t D_1^3}\right],$$

where $\psi$ is the angle of the truncated conical taper on the lower end of said lower plunger, $\varphi$ is a total slippage of the fluid between said lower and upper cylinders and said lower and upper plungers, correspondingly, $n_S$ is a Strouhal number, $L_{str}$ is the length of the upstroke of the pumping unit, $D_1$ is the diameter of said lower plunger, $d_r$ is the diameter of said sucker rods, $C_s$ is a velocity of a shear wave in the hydrocarbon bearing formation sublayer, $\Delta t$ is the discharging time of the compressed liquid from the compression chamber, $S$ is a thickness of the hydrocarbon bearing formation sublayer having the particular dominant frequency,

whereby said angle of said truncated conical taper provides the generation of the periodic vortices in a regime of an auto-oscillations and the frequency of said auto-oscillations equals to said dominant frequency of the formation thereby providing the resonance phenomenon as an act of coincidence between frequency of said auto-oscillations generated by said apparatus and a dominant frequency of formation.

4. Apparatus as defined in claim **3,** wherein the length **I** of said truncated conical taper (16) on a lower end of said lower plunger (34) is determined by the following expression:

$$0.1D_1 \leq l \leq \frac{D_1}{2\tan\psi},$$

where **I** is a length of said truncated conical taper on a lower end of said lower plunger lower end, $D_1$ is a diameter of said lower plunger, $\psi$ is an angle of said truncated conical taper on the lower end of the said lower plunger.

5. Apparatus as defined in claim **3,** wherein a distance $L_2$ between a top of said lower plunger (34) and a bottom of said upper plunger (32) is determined by the following expression:

$$\frac{H_1 + L_1 - (l_1 + l_2 + L_{str})}{1 - \frac{(D_1^2 - D_2^2)A_{sw}}{Ed_r^2}} \leq L_2 \leq (H_1 + H_2 + L_1) - (l_1 + l_2 + L_{str}),$$

where $H_1$ is a length of said lower cylinder, $H_2$ is a length of said upper cylinder, $l_1$ is a length of said lower plunger, $L_1$ is a length of said compression chamber, $l_2$ is a length of said upper plunger, $L_{str}$ is a length of the upstroke of the pumping unit, $D_1$ is a diameter of said lower plunger, $D_2$ is a diameter of said upper plunger, $A_{sw}$ is a required amplitude of the generated shock wave, $E$ is a modulus of the elasticity of the sucker rod's material, $d_r$ is a diameter of the sucker rods.

6. Apparatus as defined in claim **3,** wherein the distance $L_4$ between the bottom of the damper plunger (11) and the top of the upper plunger (32) is determined by the following expression:

$$H_1 + H_2 + H_3 + L_1 + L_3 - (l_1 + l_2 + L_2 + l_3 + L_{str}) \leq L_4 \leq$$
$$(H_1 + H_2 + H_3 + L_1 + L_3 + l_3) - (l_1 + l_2 + L_2 + L_{str}),$$

where $H_1$ is a length of said lower cylinder, $H_2$ is a length of said upper cylinder, $l_1$ is a length of said lower plunger, $L_1$ is a length of said compression chamber, $l_2$ is a length of said upper plunger, $l_3$ is a length of said damper plunger, $H_3$ is a length of said damper cylinder, $L_3$ is a length of said damper chamber, $L_2$ is a distance between the top of said lower plunger and the bottom of said upper plunger, $L_{str}$ is a length of the upstroke of the pumping unit.

7. Apparatus as defined in claim **3** wherein the total length of the sucker rods (4) connecting the top of said damper plunger (11) and the bottom of said polish rod (1) is reduced compared with the distance ($L_5$) between the bottom of said polish rod (1) and the top of said damper plunger (11) corresponding to the position when the bottom of the lower plunger **34** resides at the bottom of the lower cylinder **26** relatively to the position of the pumping unit corresponding to the start of upstroke by a distance $\lambda$ determined by the following formulae:

$$\lambda \geq \frac{H}{E}\left[\frac{(D_1^2 - D_2^2)A_{sw}}{d_r^2} + \frac{gH(\rho_s - \rho_f)}{2}\right] + H\eta,$$

where $D_1$ is a diameter of said lower plunger, $D_2$ is a diameter of said upper plunger, $A_{sw}$ is a required amplitude of the generated shock wave, $H$ is a positional depth of the bottom of said lower plunger corresponding to the bottom/start of the pumping unit upstroke, $H = l_1 + l_2 + l_3 + L_2 + L_4 + L_s$, wherein $l_1$ is a length of said lower plunger, $l_2$ is a length of said upper plunger, $l_3$ is a length of said damper plunger, $L_2$ is a distance between a top of said lower plunger (34) and a bottom of said upper plunger (32), $L_4$ is a distance between the bottom of the damper plunger (11) and the top of the upper plunger (32), $L_5$ is a length of the sucker rods between the bottom of said polish rod (1) and the top of said damper plunger (11), $E$ is a modulus of the elasticity of said sucker rod's material,

**d$_r$** is a diameter of said sucker rods, $\rho_s$ is a density of the pumping means material, $\rho_s$ is a density of the liquid, $\pi$ = 3.1415, $\eta$ is a buckling coefficient of said sucker rods inside said tubing per unit of the tubing length.

**Patentansprüche**

1. Verfahren für das Produzieren von Stoßwellen in einem Bohrloch (19) einer ganz oder teilweise mit Flüssigkeit gefüllten Bohrung, zur Stimulation eines Produktionshorizonts kohlenwasserstoffführender Formationen, die folgenden Schritte umfassend:

   a) Positionieren einer Vorrichtung, die an einem Boden eines Rohrstrangs (6) angeschlossen ist und sich nach unten in das Bohrloch (19) der ganz oder teilweise mit der Flüssigkeit gefüllten Bohrung erstreckt, wobei die Vorrichtung Folgendes beinhaltet:

   i) Einen Dämpfungszylinder (12), der an einem Boden des Rohrstrangs (6) an einem oberen Ende und an einem Dämpfungszylinder (8) an einem unteren Ende angeschlossen ist;
   ii) einen oberen Zylinder (20), der mit einer Dämpfungskammer (8) verbunden ist, und wobei der Dämpfungszylinder (12) einen anderen Innendurchmesser hat als ein Innendurchmesser des oberen Zylinders (20) und wobei die Dämpfungskammer (8) einen Hydraulikanschluss zum Bohrloch (19) der Bohrung über mindestens ein Loch an einer Seitenfläche der Dämpfungskammer (8) aufweist;
   iii) einen Dämpfungskolben (11), der innerhalb des Dämpfungszylinders (12) beweglich angeordnet und mit einer Pumpeneinheit über mindestens eine Saugstange (4) und eine Polierstange (1) an einem oberen Ende verbunden ist und mit einem oberen Kolben (32) über mindestens eine Saugstange (7) an dem unteren Ende verbunden ist, um eine konstante Gegenkraft innerhalb der Dämpfungskammer (8) an einem Aufwärtshub der Pumpeneinheit infolge eines konstanten Fluidstroms aus der Dämpfungskammer (8) in das Bohrloch (19) der Bohrung oder aus dem Bohrloch (19) der Bohrung in die Dämpfungskammer (8) durch mindestens ein Loch an einer Seitenfläche der Dämpfungskammer (8) zu erzeugen;
   iv) einen unteren Zylinder (26), der mit dem oberen Zylinder (20) über einen Kompressionsraum (22) verbunden ist, und wobei der obere Zylinder (20) einen kleineren Innendurchmesser hat als der Innendurchmesser des unteren Zylinders (26);
   v) einen unteren Kolben (34), der mit dem oberen Kolben (32) über mindestens eine Saugstange (13) verbunden ist, und wobei der obere und der untere Kolben (32, 34) innerhalb des oberen und des unteren Zylinders (12, 26) entsprechend beweglich angeordnet sind, um die in dem Kompressionsraum (22) enthaltene Flüssigkeit zu komprimieren und die Flüssigkeit in das Bohrloch (19) einzuleiten, wenn der untere Kolben (34) aus dem unteren Zylinder (26) durch den Aufwärtshub der Pumpeneinheit heraustritt und dadurch eine Stoßwelle erzeugt;
   **gekennzeichnet durch**

   b) Bereitstellen einer Länge eines Aufwärtshubs **L$_{str}$** der Pumpeneinheit, die durch folgenden Ausdruck bestimmt wird:

   $$I_{str} \geq H_1 + \frac{(D_1^2 - D_2^2)A_{sw}L_2}{Ed_r^2},$$

   wobei **H$_1$** die Länge des unteren Zylinders (26) ist, **L$_2$** der Abstand zwischen der Oberseite des unteren Kolbens (34) und dem Boden des oberen Kolbens (32), D$_1$ der Durchmesser des unteren Kolbens (34) ist, **D$_2$** der Durchmesser des oberen Kolbens (32) ist, **A$_{sw}$** die erforderliche Amplitude der erzeugten Stoßwelle ist, E ein Betrag einer Elastizität des Saugstangen-Materials ist, **d$_r$** der Durchmesser der Saugstangen (4, 7, 13) ist und
   wobei das untere Ende des unteren Kolbens eine Kegelstumpf-Konfiguration aufweist, dieser Kegelstumpf ist ein konischer Kegelstumpf, und wobei der konische Kegelstumpf einen Winkel im Verhältnis zu einer vertikalen Symmetrieachse des unteren Kolbens umfasst, der durch die folgende Formel bestimmt wird:

$$\psi = \frac{1}{3}\arccos ine\left[\frac{2S(1-\varphi)n_S L_{str}\left(D_1^2 - d_r^2\right)}{C_s \Delta t D_1^3}\right],$$

wobei $\psi$ der Winkel des konischen Kegelstumpfes an dem unteren Ende des unteren Kolbens ist, $\phi$ ein vollständiges Durchgleiten der Flüssigkeit zwischen dem unteren und dem oberen Zylinder und dem unteren und dem oberen Kolben ist, ns eine Strouhal-Zahl ist, $L_{str}$ die Länge des Aufwärtshubs der Pumpeneinheit ist, Di der Durchmesser des unteren Kolbens ist, $d_r$ der Durchmesser der Saugstangen ist, $C_s$ eine Geschwindigkeit einer Scherwelle in der kohlenwasserstoffführenden Formations-Unterschicht ist, $\Delta t$ die Austrittzeit der komprimierten Flüssigkeit aus dem Kompressionsraum ist, $S$ eine Dicke der kohlenwasserstoffführenden Formations-Unterschicht mit der bestimmten dominanten Frequenz ist,

wobei der Winkel des konischen Kegelstumpfes für die Erzeugung der periodischen Wirbel in einem Regime von selbsterregten Schwingungen sorgt und die Frequenz der selbsterregten Schwingungen gleich der dominanten Frequenz der Formation ist, wodurch das Resonanzphänomen als ein zufälliger Akt zwischen der Frequenz der von der Vorrichtung erzeugten selbsterregten Schwingungen und der dominanten Frequenz der Formation entsteht.

2. Verfahren nach Anspruch **1**, wobei die Pumpeneinheit nicht weniger als 12 Stunden pro Tag in Betrieb ist.

3. Vorrichtung für das Produzieren von Stoßwellen in einem Bohrloch (19) einer ganz oder teilweise mit Flüssigkeit gefüllten Bohrung, zur Stimulation der Produktionshorizonte kohlenwasserstoffführender Formationen, die Vorrichtung umfassend:

a) Einen Rohrstrang (6), der sich nach unten in das Bohrloch (19) der ganz oder teilweise mit der Flüssigkeit gefüllten Bohrung erstreckt;

b) einen Dämpfungszylinder (12), der mit dem Boden des Rohrstrangs (6) an dem oberen Ende und mit einer Dämpfungskammer (8) am unteren Ende verbunden ist, und der Dämpfungsraum (8), der mit einem oberen Zylinder (20) verbunden ist, und wobei der Dämpfungszylinder (12) einen anderen Innendurchmesser hat als ein Innendurchmesser des oberen Zylinders (20);

c) einen Dämpfungskolben (11), der innerhalb des Dämpfungszylinders (12) beweglich angeordnet und mit einer Pumpeneinheit über mindestens eine Saugstange (4) und eine Polierstange (1) an einem oberen Ende und mit einem oberen Kolben (32), der innerhalb des oberen Zylinders (20) beweglich angeordnet ist, an dem unteren Ende verbunden ist, um eine konstante Gegenkraft innerhalb der Dämpfungskammer (8) an dem Aufwärtshub der Pumpeneinheit infolge eines konstanten Fluidstroms aus der Dämpfungskammer (8) in das Bohrloch (19) der Bohrung oder aus dem Bohrloch (19) der Bohrung in die Dämpfungskammer (12) durch mindestens ein Loch an einer Seitenfläche der Dämpfungskammer (8) zu erzeugen, wodurch die hydraulische Verbindung zwischen der Dämpfungskammer (12) und dem Bohrloch (19) bereitgestellt wird;

einen unteren Zylinder (26), der über einen Kompressionsraum (22) mit dem oberen Zylinder (20) verbunden ist, der einen kleineren Innendurchmesser hat als der Innendurchmesser des unteren Zylinders (26);

d) einen unteren Kolben (34), der innerhalb des unteren Zylinders (26) beweglich angeordnet ist, und wobei der obere und der untere Kolben (20, 26) durch mindestens eine Saugstange (13) miteinander verbunden sind, um die in dem Kompressionsraum (22) enthaltene Flüssigkeit zu komprimieren und die Flüssigkeit in das Bohrloch (19) der Bohrung einzuleiten, wenn der untere Kolben (34) aus dem unteren Zylinder (26) durch den Aufwärtshub der Pumpeneinheit heraustritt und dadurch eine Stoßwelle erzeugt; und

**dadurch gekennzeichnet, dass**

e) das untere Ende des unteren Kolbens (34) eine Kegelstumpf-Konfiguration umfasst, wobei dieser Kegelstumpf ein konischer Kegelstumpf ist und wobei der konische Kegelstumpf einen Winkel im Verhältnis zu einer vertikalen Symmetrieachse des unteren Kolbens umfasst, der durch die folgende Formel bestimmt wird:

$$\psi = \frac{1}{3}\arccos ine\left[\frac{2S(1-\varphi)n_S L_{str}\left(D_1^2 - d_r^2\right)}{C_s \Delta t D_1^3}\right],$$

wobei $\psi$ der Winkel des konischen Kegelstumpfes an dem unteren Ende des unteren Kolbens ist, $\phi$ ein vollständiges Durchgleiten der Flüssigkeit zwischen dem unteren und dem oberen Zylinder und dem unteren und dem oberen Kolben ist, ns eine Strouhal-Zahl ist, $L_{str}$ die Länge des Aufwärtshubs der Pumpeneinheit ist, $D_1$ der Durchmesser des unteren Kolbens ist, $d_r$ der Durchmesser der Saugstangen ist, $C_s$ eine Geschwindigkeit einer Scherwelle in der kohlenwasserstoffführenden Formations-Unterschicht ist, $\Delta t$ die Austrittzeit der komprimierten Flüssigkeit aus dem Kompressionsraum ist, $S$ eine Dicke der kohlenwasserstoffführenden Formations-Unterschicht mit der bestimmten dominanten Frequenz ist,

wobei der Winkel des konischen Kegelstumpfes für die Erzeugung der periodischen Wirbel in einem Regime von selbsterregten Schwingungen sorgt und die Frequenz der selbsterregten Schwingungen gleich der dominanten Frequenz der Formation ist, wodurch das Resonanzphänomen als ein zufälliger Akt zwischen der Frequenz der von der Vorrichtung erzeugten selbsterregten Schwingungen und der dominanten Frequenz der Formation entsteht.

4. Vorrichtung nach Anspruch **3,** wobei die Länge **1** des konischen Kegelstumpfes (16) an einem unteren Ende des unteren Kolbens (34) durch den folgenden Ausdruck bestimmt wird:

$$0.1 D_1 \leq l \leq \frac{D_1}{2 \tan \psi},$$

wobei **1** eine Länge des konischen Kegelstumpfes an einem unteren Ende des unteren Kolbens ist, $D_1$ ein Durchmesser des unteren Kolbens ist, $\psi$ ein Winkel des konischen Kegelstumpfes an dem unteren Ende des unteren Kolbens ist.

5. Vorrichtung nach Anspruch **3,** wobei ein Abstand $L_2$ zwischen einer Oberseite des unteren Kolbens (34) und einer Unterseite des oberen Kolbens (32) durch den folgenden Ausdruck bestimmt wird:

$$\frac{H_1 + L_1 - (l_1 + l_2 + L_{str})}{1 - \frac{(D_1^2 - D_2^2) A_{sw}}{E d_r^2}} \leq L_2 \leq (H_1 + H_2 + L_1) - (l_1 + l_2 + L_{str}),$$

wobei $H_1$ eine Länge des unteren Zylinders ist, $H_2$ eine Länge des oberen Zylinders ist, $l_1$ eine Länge des unteren Kolbens ist, $L_1$ eine Länge des Kompressionsraums ist, $l_2$ eine Länge des oberen Kolbens ist, $L_{str}$ eine Länge des Aufwärtshubs der Pumpeneinheit ist, $D_1$ ein Durchmesser des unteren Kolbens ist, $D_2$ ein Durchmesser des oberen Kolbens ist, $A_{sw}$ eine erforderliche Amplitude der erzeugten Stoßwelle ist, $E$ ein Betrag der Elastizität des Saugstangen-Materials ist, $d_r$ ein Durchmesser der Saugstangen ist.

6. Vorrichtung nach Anspruch **3,** wobei der Abstand $L_4$ zwischen dem Boden des Dämpfungskolbens (11) und der Oberseite des oberen Kolbens (32) durch den folgenden Ausdruck bestimmt wird:

$$H_1 + H_2 + H_3 + L_1 + L_3 - (l_1 + l_2 + L_2 + l_3 + L_{str}) \leq L_4 \leq$$
$$(H_1 + H_2 + H_3 + L_1 + L_3 + l_3) - (l_1 + l_2 + L_2 + L_{str}),$$

wobei $H_1$ eine Länge des unteren Zylinders ist, $H_2$ eine Länge des oberen Zylinders ist, $l_1$ eine Länge des unteren Kolbens ist, $L_i$ eine Länge des Kompressionsraums ist, $l_2$ eine Länge des oberen Kolbens ist, $l_3$ eine Länge des Dämpfungskolbens ist, $H_3$ eine Länge des Dämpfungszylinders ist, $L_3$ eine Länge der Dämpfungskammer ist, $L_2$ ein Abstand zwischen der Oberseite des unteren Kolbens und dem Boden des oberen Kolbens ist, $L_{str}$ eine Länge des Aufwärtshubs der Pumpeneinheit ist.

7. Vorrichtung nach Anspruch **3,** wobei die Gesamtlänge der Saugstangen (4), die die Oberseite des Dämpfungskolbens (11) und den Boden der Polierstange (1) verbinden, im Vergleich zu dem Abstand ($L_5$) zwischen dem Boden der Polierstange (1) und der Oberseite des Dämpfungskolbens (11), der der Position entspricht, wenn der Boden des unteren Kolbens **34** auf dem Boden des unteren Zylinders **26** aufliegt, im Verhältnis zu der Position der Pumpeneinheit, die dem Beginn des Aufwärtshubs entspricht, um einen Abstand $\lambda$ reduziert ist, der durch die folgende Formel bestimmt wird:

$$\lambda \geq \frac{H}{E}\left[\frac{(D_1^2 - D_2^2)A_{sw}}{d_r^2} + \frac{gH(\rho_s - \rho_f)}{2}\right] + H\eta \ ,$$

wobei $D_1$ ein Durchmesser des unteren Kolbens ist, $D_2$ ein Durchmesser des oberen Kolbens ist, $A_{sw}$ eine erforderliche Amplitude der erzeugten Stoßwelle ist, $H$ eine Positionstiefe des Bodens des unteren Kolbens ist, die dem Boden/Beginn des Aufwärtshubs der Pumpeneinheit entspricht, $H = l_1 + l_2 + l_3 + L_2 + L_4 + L_5$, wobei $l_i$ eine Länge des unteren Kolbens ist, $h$ eine Länge des oberen Kolbens ist, $b$ eine Länge des Dämpfungskolbens ist, $L_2$ ein Abstand zwischen einer Oberseite des unteren Kolbens (34) und einer Unterseite des oberen Kolbens (32) ist, $L_4$ ein Abstand zwischen dem Boden des Dämpfungskolbens (11) und der Oberseite des oberen Kolbens (32) ist, $L_5$ eine Länge der Saugstangen zwischen der Unterseite der Polierstange (1) und der Oberseite des Dämpfungskolbens (11) ist, $E$ ein Betrag der Elastizität des Saugstangen-Materials ist, $d_r$ ein Durchmesser der Saugstangen ist, $\rho_s$ eine Dichte des Pumpenmaterials ist, $\rho_s$ eine Dichte der Flüssigkeit, $\Pi = 3.1415$ ist, $\eta$ eine Knickzahl der Saugstangen innerhalb des Rohrstrangs pro Einheit der Rohrlänge ist.

## Revendications

1. Procédé destiné à la production d'ondes de choc dans un trou de forage (19) d'un puits rempli ou partiellement rempli par un liquide, destiné à la stimulation des horizons de production d'une formation contenant des hydrocarbures, comprenant les étapes suivantes :

   a) le positionnement d'un dispositif relié à la partie inférieure d'une colonne de tubage (6) s'étendant vers le bas dans le trou de forage (19) du puits rempli ou partiellement rempli par le liquide. Le dispositif comportant :

   i) un cylindre d'amortissement (12) relié à une partie inférieure de ladite colonne de tubage (6) au niveau d'une extrémité supérieure et à une chambre d'amortissement (8) au niveau d'une extrémité inférieure ;
   ii) un cylindre supérieur (20) relié à une chambre d'amortissement (8) et ledit cylindre d'amortissement (12) présente un diamètre interne différent du diamètre interne dudit cylindre supérieur (20) et ladite chambre d'amortissement (8) présente un raccordement hydraulique avec le trou de forage (19) du puits par l'intermédiaire d'au moins un trou sur une surface latérale de ladite chambre d'amortissement (8) ;
   iii) un piston d'amortissement (11) agencé de manière mobile dans ledit cylindre d'amortissement (12) et relié à une unité de pompage au moyen d'au moins une tige d'aspiration (4) et d'une tige polie (1) à une extrémité supérieure et relié à un piston supérieur (32) par au moins une tige d'aspiration (7) à l'extrémité inférieure destinée à créer une force antagoniste constante à l'intérieur de ladite chambre d'amortissement (8) lors d'une course ascendante de l'unité de pompage en conséquence d'un écoulement constant du fluide depuis ladite chambre d'amortissement (8) vers le trou de forage (19) du puits ou depuis le trou de forage (19) du puits vers ladite chambre d'amortissement (8) à travers ledit au moins un trou sur une surface latérale de ladite chambre d'amortissement (8) ;
   iv) un cylindre inférieur (26) relié audit cylindre supérieur (20) par l'intermédiaire d'une chambre de compression (22) et ledit cylindre supérieur (20) présente un diamètre interne inférieur au diamètre interne dudit cylindre inférieur (26) ;
   v) un piston inférieur (34) relié audit piston supérieur (32) par au moins une tige d'aspiration (13) et lesdits pistons supérieur et inférieur (32, 34) étant agencés de manière mobile à l'intérieur desdits cylindres supérieur et inférieur (12, 26), de manière correspondante, destinés à comprimer le liquide contenu dans ladite chambre de compression (22) et à décharger le liquide dans le trou de forage (19) lorsque ledit piston inférieur (34) sort dudit cylindre inférieur (26) lors de la course ascendante de l'unité de pompage, ce qui permet de générer une onde de choc ;
   **caractérisé par**

   b) la fourniture d'une longueur de course ascendante $L_{str}$ de l'unité de pompage déterminée par l'expression suivante :

$$L_{str} \geq H_1 + \frac{(D_1^2 - D_2^2)A_{sw}L_2}{Ed_r^2} ,$$

dans laquelle **H₁** est la longueur dudit cylindre inférieur (26), **L₂** est la distance entre la partie supérieure dudit piston inférieur (34) et la partie inférieure dudit piston supérieur (32), **D₁** est le diamètre dudit piston inférieur (34), **D₂** est le diamètre dudit piston supérieur (32), **A_sw** est l'amplitude requise de l'onde de choc générée, **E** est un module d'une élasticité du matériau de la tige d'aspiration, **d_r** est le diamètre desdites tiges d'aspiration (4, 7, 13) et

dans lequel ladite extrémité inférieure du piston inférieur présente une configuration de cône tronqué, ledit cône tronqué est une partie conique tronquée, et dans lequel ladite partie conique tronquée comprend un angle par rapport à un axe de symétrie vertical dudit piston inférieur déterminé par les formules suivantes :

$$\psi = \frac{1}{3}\arccos ine\left[\frac{2S(1-\varphi)n_S L_{str}\left(D_1^2 - d_r^2\right)}{C_s \Delta t D_1^3}\right],$$

dans laquelle $\psi$ est l'angle de ladite partie conique tronquée sur l'extrémité inférieure dudit piston inférieur, $\Phi$ est un glissement total du fluide entre lesdits cylindres inférieur et supérieur et lesdits pistons inférieur et supérieur, de manière correspondante, **n_s** est un nombre de Strouhal, **L_str** est la longueur de la course ascendante de l'unité de pompage, **D₁** est le diamètre dudit piston inférieur, **d_r** est le diamètre desdites tiges d'aspiration, **C_s** est la vitesse d'une onde de cisaillement dans la sous-couche de la formation contenant des hydrocarbures, $\Delta$**t** est le temps de décharge du liquide comprimé depuis ladite chambre de compression, **S** est une épaisseur de la sous-couche de la formation contenant des hydrocarbures présentant la fréquence dominante particulière,

ledit angle de ladite partie conique tronquée fournit la génération des tourbillons périodiques dans un régime d'auto-oscillations et la fréquence desdites auto-oscillations est égale à ladite fréquence dominante de formation, ce qui permet de fournir le phénomène de résonance comme un acte de coïncidence entre la fréquence desdites vibrations d'auto-oscillations générées par ledit appareil et la fréquence dominante de formation.

2. Procédé tel que défini dans la revendication **1** dans lequel l'unité de pompage ne fonctionne pas moins de 12 heures par jour.

3. Appareil destiné à la production d'ondes de choc dans un trou de forage (19) d'un puits rempli ou partiellement rempli par un liquide, destiné à la stimulation des horizons de production d'une formation contenant des hydrocarbures dans le régime d'une résonance, l'appareil comprenant :

a) une colonne de tubage (6) s'étendant vers le bas dans le trou de forage (19) du puits rempli ou partiellement rempli par le liquide :
b) un cylindre d'amortissement (12) relié à la partie inférieure de la colonne de tubage (12) au niveau de l'extrémité supérieure et à une chambre d'amortissement (8) au niveau de l'extrémité inférieure et ladite chambre d'amortissement (8) étant reliée à un cylindre supérieur (20), ledit cylindre d'amortissement (12) présentant un diamètre interne différent du diamètre interne dudit cylindre supérieur (20) ;
c) un piston d'amortissement (11) agencé de manière mobile dans ledit cylindre d'amortissement (12) et relié à une unité de pompage par au moins une tige d'aspiration (4) et d'une tige polie (1) à une extrémité supérieure et à un piston supérieur (32) agencé de manière mobile à l'intérieur dudit cylindre supérieur (20) à l'extrémité inférieure destinée à créer une force antagoniste constante à l'intérieur de ladite chambre d'amortissement (8) sur la course ascendante de l'unité de pompage à la suite d'un écoulement constant du fluide depuis ladite chambre d'amortissement (8) vers le trou de forage (19) du puits ou depuis le trou de forage (19) du puits vers ladite chambre d'amortissement (12) à travers au moins un trou sur la surface latérale de ladite chambre d'amortissement (12) ce qui permet de fournir la communication hydraulique entre ladite chambre d'amortissement (12) et le trou de forage (19) ;
un cylindre inférieur (26) relié par l'intermédiaire d'une chambre de compression (22) audit cylindre supérieur (20) présentant un diamètre interne inférieur au diamètre interne dudit cylindre inférieur (26) ;
d) un piston inférieur (34) agencé de manière mobile à l'intérieur dudit cylindre inférieur (26) et lesdits pistons supérieur et inférieur (20, 26) étant reliés l'un à l'autre par au moins une tige d'aspiration (13) destinée à comprimer le liquide contenu dans ladite chambre de compression (22) et à décharger le liquide dans le trou de forage (19) du puits lorsque ledit piston inférieur (34) sort dudit cylindre inférieur (26) lors de la course ascendante de l'unité de pompage, ce qui permet de générer l'onde de choc ;
**caractérisé en ce que**

e) l'extrémité inférieure dudit piston inférieur (34) comprend une configuration de cône tronqué, ledit cône tronqué est une partie conique tronquée, et dans lequel ladite partie conique tronquée comprend un angle par rapport à un axe de symétrie verticale dudit piston inférieur déterminé par les formules suivantes :

$$\psi = \frac{1}{3}\arccos\!ine\left[\frac{2S(1-\varphi)n_S L_{str}\left(D_1^2 - d_r^2\right)}{C_s \Delta t D_1^3}\right],$$

dans laquelle $\psi$ est l'angle de la partie conique tronquée sur l'extrémité inférieure dudit piston inférieur, $\phi$ est un glissement total du fluide entre lesdits cylindres inférieur et supérieur et lesdits pistons inférieur et supérieur, de manière correspondante, $n_s$ est un nombre de Strouhal, $L_{str}$ est la longueur de la course ascendante de l'unité de pompage, $D_1$ est le diamètre dudit piston inférieur, $d_r$ est le diamètre desdites tiges d'aspiration, $C_s$ est la vitesse d'une onde de cisaillement dans la sous-couche de la formation contenant des hydrocarbures, $\Delta t$ est le temps de décharge du liquide comprimé depuis la chambre de compression, $S$ est une épaisseur de la sous-couche de la formation contenant des hydrocarbures présentant la fréquence dominante particulière,
ledit angle de ladite partie conique tronquée fournit la génération des tourbillons périodiques dans un régime d'auto-oscillations et la fréquence desdites auto-oscillations est égale à ladite fréquence dominante de formation, ce qui permet de fournir le phénomène de résonance comme un acte de coïncidence entre la fréquence desdites auto-oscillations générées par ledit appareil et la fréquence dominante de formation.

4. Appareil tel que défini dans la revendication **3,** dans lequel la longueur **1** de ladite partie conique tronquée (16) sur une extrémité inférieure dudit piston inférieur (34) est déterminée par l'expression suivante :

$$0.1D_1 \le l \le \frac{D_1}{2\tan\psi},$$

dans laquelle **1** est une longueur de ladite partie conique tronquée sur une extrémité inférieure de ladite extrémité inférieure du piston inférieur, $D_1$ est un diamètre dudit piston inférieur, $\psi$ est un angle de ladite partie conique tronquée sur l'extrémité inférieure dudit piston inférieur.

5. Appareil tel que défini dans la revendication **3,** dans lequel une distance $L_2$ entre une partie supérieure dudit piston inférieur (34) et une partie inférieure dudit piston supérieur (32) est déterminée par l'expression suivante :

$$\frac{H_1 + L_1 - (l_1 + l_2 + L_{str})}{1 - \frac{(D_1^2 - D_2^2)A_{sw}}{Ed_r^2}} \le L_2 \le (H_1 + H_2 + L_1) - (l_1 + l_2 + L_{str}),$$

dans laquelle $H_1$ est une longueur dudit cylindre inférieur, $H_2$ est une longueur dudit cylindre supérieur, $l_1$ est une longueur dudit piston inférieur, $L_1$ est une longueur de ladite chambre de compression, $l_2$ est une longueur dudit piston supérieur,
$L_{str}$ est une longueur de la course ascendante de l'unité de pompage, $D_1$ est un diamètre dudit piston inférieur, $D_2$ est un diamètre dudit piston supérieur, $A_{sw}$ est une amplitude requise de l'onde de choc générée, $E$ est un module de l'élasticité du matériau de la tige d'aspiration, $d_r$ est un diamètre des tiges d'aspiration.

6. Appareil tel que défini dans la revendication **3,** dans lequel une distance $L_4$ entre la partie inférieure du piston d'amortissement (11) et la partie supérieure du piston supérieur (32) est déterminée par l'expression suivante :

$$H_1 + H_2 + H_3 + L_1 + L_3 - (l_1 + l_2 + L_2 + l_3 + L_{str}) \le L_4 \le$$
$$(H_1 + H_2 + H_3 + L_1 + L_3 + l_3) - (l_1 + l_2 + L_2 + L_{str}),$$

Où $H_1$ est une longueur dudit cylindre inférieur, $H_2$ est une longueur dudit cylindre supérieur, $l_1$ est une longueur

dudit piston inférieur, **Li** est une longueur de ladite chambre de compression, **l$_2$** est une longueur dudit piston supérieur, **l$_3$** est une longueur dudit piston d'amortissement, **H$_3$** est une longueur dudit cylindre d'amortissement, **L$_3$** est une longueur de ladite chambre d'amortissement, **L$_2$** est une distance entre la partie supérieure dudit piston inférieur et la partie inférieure dudit piston supérieur, **L$_{str}$** est une longueur de la course ascendante de l'unité de pompage.

7. Appareil tel que défini dans la revendication **3,** dans lequel la longueur totale des tiges d'aspiration (4) reliant la partie supérieure dudit piston d'amortissement (11) et la partie inférieure de ladite tige polie (1) est réduite par rapport à la distance (L$_5$) entre la partie inférieure de ladite tige polie (1) et la partie supérieure dudit piston d'amortissement (11) correspondant à la position où la partie inférieure du piston inférieur **34** réside à la partie inférieure du cylindre inférieur **26** par rapport à la position de l'unité de pompage correspondant au début de course ascendante d'une distance *a* déterminée par les formules suivantes :

$$\lambda \geq \frac{H}{E}\left[\frac{(D_1^2 - D_2^2)A_{sw}}{d_r^2} + \frac{gH(\rho_s - \rho_f)}{2}\right] + H\eta \quad,$$

dans laquelle **D$_1$** est un diamètre dudit piston inférieur, **D$_2$** est un diamètre dudit piston supérieur, **A$_{sw}$** est une amplitude requise de l'onde de choc générée, **H** est une profondeur de position de la partie inférieure dudit piston inférieur correspondant à la partie inférieure/au début de la course ascendante de l'unité de pompage, H = l$_1$ + l$_2$ + l$_3$ + L$_2$ + L$_4$ + Ls, dans laquelle **li** est une longueur dudit piston inférieur, **h** est une longueur dudit piston supérieur, **b** est une longueur dudit piston d'amortissement, **L$_2$** est une distance entre une partie supérieure dudit piston inférieur (34) et une partie inférieure dudit piston supérieur (32), **L$_4$** est une distance entre la partie inférieure du piston d'amortissement (11) et la partie supérieure du piston supérieur (32), L$_5$ est une longueur des tiges d'aspiration entre la partie inférieure de ladite tige polie (1) et la partie supérieure dudit piston d'amortissement (11). E est un module de l'élasticité du matériau de ladite tige d'aspiration, **d$_r$** est un diamètre desdites tiges d'aspiration, **p$_s$** est une densité du matériau du moyen de pompage, **p$_s$** est une densité du liquide, $\Pi$ = 3,1415, $\eta$ est un coefficient de flambage desdites tiges d'aspiration à l'intérieur dudit tubage par unité de longueur de tubage.

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6015010 A
- US 6899175 B
- US 7980301 B
- US 8459351 B
- US 20120175107 A

**Non-patent literature cited in the description**

- **V.N. NIKOLAYEVSKY.** Residual Oil Reservoir Recovery with Seismic Vibrations. *SPE 29155, Production & Facility,* May 1995, 89-94
- **SOBEY, IAN J.** Oscillatory flows at intermediate Strouhal number in asymmetry channels. *Journal of Fluid Mechanics,* 1982, (125), 359-373
- **SAKAMOTO, H. ; HANIU, H.** A study on vortex shedding from spheres in uniform flow. *Journal of Fluids Engineering,* 1990, (112), 386-392